# FASCICULE DE BREVET EUROPEEN

(11) **EP 0 528 711 B1**
(45) Date de publication et mention de la délivrance du brevet: **28.06.1995**
(21) Numéro de dépôt: 92402178.5
(22) Date de dépôt: 29.07.1992
(51) Int. Cl.: B29C 45/04, B29C 45/14

(54) **Procédé et dispositif pour le surmoulage d'un vitrage**
Verfahren und Vorrichtung zum Umgiessen einer Verglasung
Method and apparatus for coating a glazing

(30) Priorité: 13.08.1991 FR 9110263
(43) Date de publication de la demande: 24.02.1993
(73) Titulaire: SAINT-GOBAIN VITRAGE, 92400 Courbevoie (FR)
(72) Inventeur: Douche, Jean-Pierre, F-60150 Plessis Brion (FR); Armand, Philippe, F-75018 Paris (FR)
(74) Mandataire: Le Vaguerèse, Sylvain Jacques

(56) Documents cités:
- EP-A- 0 268 174
- DE-A- 2 849 604
- FR-A- 1 228 490
- FR-A- 1 311 191
- FR-A- 1 516 969
- FR-A- 2 073 141
- FR-A- 2 343 590
- GB-A- 2 039 463
- US-A- 4 695 420
- PATENT ABSTRACTS OF JAPAN vol. 14, no. 355 (M-1004)(4298) 31 Juillet 1990 & JP-A-02 125 712 (SUMITOMO HEAVY IND.)
- PATENT ABSTRACTS OF JAPAN vol. 13, no. 28 (M-788)(3376) 23 Janvier 1989 & JP-A-63 242 511 (SUEHIRO SANGYO)

## Description

La présente invention concerne l'encapsulation ou le surmoulage d'un vitrage en verre et/ou en matière plastique par injection d'une matière plastique sur au moins une partie du vitrage.

L'invention a trait en particulier à un procédé et à un dispositif de surmoulage mettant en oeuvre ce procédé.

Le procédé d'encapsulation par injection de matières plastiques sur au moins une partie d'un vitrage placé dans un moule comprend, notamment, les opérations suivantes :
■ mise en place du vitrage dans le moule,
■ éventuellement, mise en place dans le moule d'éléments additionnels au vitrage, avant et/ou après la mise en place du vitrage,
■ fermeture du moule et mise sous pression,
■ injection de matières plastiques,
■ libération de la pression de moulage
■ polymérisation ou refroidissement de la matière plastique injectée,
■ ouverture du moule,
■ extraction du vitrage surmoulé.

Ces différentes opérations peuvent s'effectuer à un poste unique. Dans ce cas, la presse, disposée à ce poste, est monopolisée durant toutes ces opérations. De plus, la presse doit alors être munie d'une grande amplitude d'ouverture afin de faciliter l'accès au contenu du moule. Ces deux impératifs entraînent une faible cadence de fabrication et donc un coût élevé.

En vue d'améliorer cette cadence, il a été proposé dans le document GB-A-2 039 463 un procédé pour mouler des articles, notamment des chaussures en matière plastique. Les différentes opérations envisagées sont réalisées en trois postes : un poste principal et deux postes annexes. Selon ce procédé, on peut, pendant le chargement ou le déchargement d'un moule, injecter de la matière plastique dans un autre moule. Cependant, les deux moule envisagés sont solidaires, c'est-à-dire que leurs mouvements respectifs sont obligatoirement simultanés. Ainsi, en cas de problème sur l'un des moules, l'autre est immobilisé. Il a été également proposé un procédé du type carrousel ; les différentes opérations constituant ce procédé sont réalisées en des postes différents, un transfert par rotation étant prévu pour passer d'un poste à l'autre. Ainsi, on a proposé un procédé à carrousel dans lequel l'ensemble des opérations s'effectue en quatre postes différents. La fabrication d'un vitrage surmoulé nécessite, dans ce cas, l'utilisation de quatre outillages (moules). L'investissement en outillages pour ce type de dispositif est donc lourd.

De plus, en cas de problème sur un des outillages, l'ensemble du système est bloqué. Pour une raison évidente de coût d'outillages, ce dispositif s'applique donc uniquement à la production de pièces de petites dimensions, produites en grandes séries.

La présente invention obvie aux inconvénients cités.

L'invention a pour but de minimiser le temps d'un cycle de production d'un vitrage surmoulé, avec une flexibilité de mise en oeuvre et un coût réduit.

L'invention propose un procédé d'injection de matières plastiques, sur au moins une partie d'un vitrage monolithique ou feuilleté, en verre, placé dans un moule disposé horizontalement, procédé se déroulant en trois postes : un poste principal et deux postes annexe. Ce procédé comprend notamment les étapes suivantes :
· chargement d'un vitrage et, éventuellement, d'inserts dans un premier moule à un poste, dit poste annexe, ce moule étant ensuite fermé et mis sous une pression intermédiaire,
· chargement d'un deuxième vitrage et, éventuellement, d'inserts dans un deuxième moule dans un deuxième poste annexe, ce moule étant ensuite fermé et mis sous une pression intermédiaire,
   · mouvements de transfert de chaque moule de leur poste annexe respectif vers le poste principal et vice-versa, indépendamment l'un de l'autre, chaque moule étant affecté à un poste annexe,
   · mise sous pression et injection de matière plastique, au poste principal, dans l'un des deux moules, l'autre moule étant soit dans son poste annexe respectif, soit en mouvement,
   · ouverture et déchargement de l'un ou l'autre moule dans son poste annexe respectif.

L'un des avantages du procédé opérant en deux postes sur un moule avec deux moules, chacun d'eux étant affecté à un poste annexe selon l'invention, est qu'il permet, à l'aide de deux outillages (moules) de surmouler conjointement deux vitrages qui peuvent être, le cas échéant, différents quant à leur forme et/ou dimensions. Par moule, on entend selon l'invention le moule proprement dit et le contre-moule.

Pendant qu'une partie des opérations du procédé se déroule au poste principal pour un vitrage contenu dans un moule, d'autres opérations du procédé se déroulent au poste annexe pour un deuxième vitrage contenu dans un autre moule. La cadence de fabrication est ainsi augmentée sans multiplier pour autant le nombre d'outillages.

Selon une réalisation de l'invention, on utilise un poste principal et deux postes annexes avec deux outillages.

Dans ce cas, un transfert est envisagé pour le passage direct de chacun des deux postes annexes au poste principal et réciproquement. Les transferts étant désolidarisés, c'est-à-dire qu'en cas d'ennui quelconque à un poste annexe, l'autre poste annexe peut fonctionner en relation avec le poste principal.

Dans une autre variante de l'invention, on utilise un poste principal et plus de deux postes annexes équivalents avec un transfert direct pour un moule de chacun des postes annexes au poste principal et réciproquement.

Selon une caractéristique avantageuse du procédé selon l'invention, après la fermeture du moule, on applique une pression intermédiaire sur le vitrage dans le moule, cette pression intermédiaire étant, de préférence, maintenue durant les transferts du moule.

Par pression intermédiaire, on entend une pression supérieure à la pression atmosphérique, mais inférieure à la pression de moulage.

Cette pression intermédiaire appliquée sur le vitrage au poste annexe après la fermeture du moule permet, notamment, de contrôler la capacité du vitrage à supporter des pressions de moulage.

Une mise sous pression réduite du moule avant l'opération d'injection est particulièrement avantageuse. Elle permet ainsi de limiter le risque de casse et, le cas échéant, de retirer le vitrage brisé avant d'attendre la fin du cycle de fabrication du vitrage surmoulé grâce à un quelconque système de détection. Une telle casse peut provenir d'un mauvais positionnement du vitrage dans le moule, d'un défaut dans la qualité du vitrage...

Un autre avantage d'une pression réduite lors du transfert du moule après l'opération d'injection est que ce temps de transfert est utilisé pour la polymérisation et/ou le refroidissement de la matière plastique.

L'invention concerne également un dispositif d'encapsulation comprenant un poste principal équipé d'une presse et d'une unité d'injection et au moins deux postes annexes, reliés directement au poste principal à l'aide de tables de transferts désolidarisées l'une de l'autre, et au moins deux outillages ou moules.

Un des avantages de l'invention est qu'à chaque poste annexe est affecté au moins un moule muni d'un dispositif de transfert. Ce dispositif est notamment une table de transfert munie d'un mouvement linéaire bidirectionnelle.

Ainsi selon l'invention, chaque moule est autonome ; un outillage peut être déficient sans que tout le dispositif soit immobilisé. On évite ainsi les temps morts relatifs à la remise en marche du procédé d'injection de la matière plastique après un arrêt correspondant à une purge de la tête d'injection. En effet, les constituants de la matière plastique risquent, durant cette période, de se dégrader, voire de se solidifier dans l'unité d'injection. De plus, à une pièce fabriquée correspond son moule ; la fabrication d'une pièce ne met donc en oeuvre qu'un outillage.

Ces moules peuvent accueillir des vitrages de formes et/ou de dimensions distinctes. Par exemple, une lunette arrière et un pare-brise de voiture peuvent être fabriqués conjointement.

Selon une forme préférée de l'invention, le poste de fermeture et d'injection ne comprend qu'une presse et qu'une unité d'injection. Etant entendu qu'afin de pouvoir injecter des matières plastiques de nature différente, ou à des débits différents (le surmoulage d'un pare-brise ne nécessite pas le même débit que le surmoulage d'une lunette arrière de voiture), la presse et l'unité d'injection sont adaptées, selon l'invention, à ces deux contraintes supplémentaires. Ainsi, la presse peut être équipée d'un système de fermeture hydraulique "tout ou rien" avec contrôle de pression et l'unité d'injection est commandée avantageusement par un dispositif muni d'un logiciel comportant plusieurs programmes d'injection spécifiques. Ce dispositif muni d'un logiciel permet en outre de réguler l'ensemble du procédé, plusieurs ordres pouvant être donnés simultanément. Ces éléments seront décrits de façon plus détaillée dans la suite de la description.

Afin d'améliorer l'accessibilité au contenu du moule, selon une forme préférée de l'invention, le moule et le contre-moule sont montés sur un porte-moule muni d'un système porte-feuilles, c'est-à-dire que le moule proprement dit est solidaire de la partie inférieure du porte-moule, alors que le contre-moule est solidaire de la partie supérieure du porte-moule, cette partie supérieure pouvant s'ouvrir par pivotement sous l'action d'au moins un vérin, de préférence deux, embarqué(s) sur le porte-moule. Un tel système permet, comme son nom l'indique et par l'action du ou de préférence deux vérins, une ouverture en portefeuilles autour d'un axe parallèle à la table de transfert, ce qui autorise une accessibilité latérale et une accessibilité frontale. Cette double accessibilité est nécessaire dans la technique d'encapsulation d'un vitrage. Lors de l'opération de chargement, aussi bien les inserts que le vitrage sont déposés dans le moule. Le vitrage monolithique ou feuilleté en verre étant un matériau fragile, éventuellement de forme bombée, il est préférable qu'il soit bien positionné, avec sa face extérieure du côté du moule, afin d'éviter toute visualisation des points d'injection sur l'encapsulat.

Un autre avantage d'un tel système porte-feuilles muni d'au moins un vérin pour l'ouverture et la fermeture est que la durée de transfert d'un moule, d'un poste à l'autre peut être utilisée, une pression intermédiaire étant maintenue par le ou les vérins, notamment lors de la polymérisation et/ou le refroidissement de la matière plastique de surmoulage. Le maintien de cette pression permet en outre de diminuer le risque de casse du vitrage, notamment lorsque le vitrage est en verre.

Selon l'invention, les opérations telles que chargement, déchargement du moule, mise en place dans le moule d'éléments additionnels... peuvent être automatisées. En effet, ces opérations sont effectuées, selon l'invention, en un poste unique, situé en dehors de la presse. En outre, l'accès au moule est facilité grâce au système portefeuilles. De plus, selon l'invention, la position horizontale du vitrage dans le moule facilite sa manipulation et évite tout glissement. Cet avantage est particulièrement appréciable quand le vitrage est en verre.

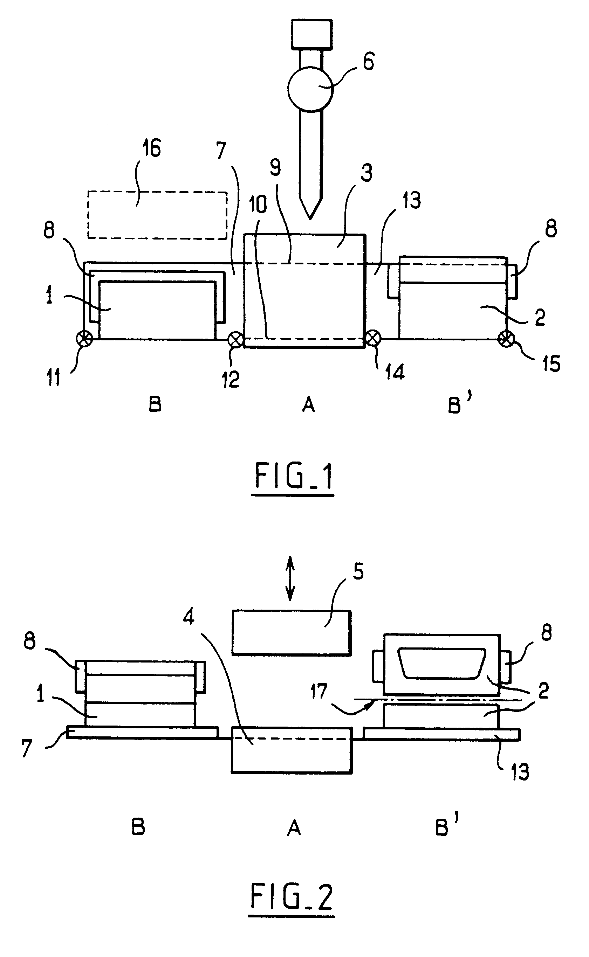

La suite de la description a trait, de façon plus détaillée, au procédé et au dispositif selon l'invention, en référence aux figures dans lesquelles :
■ la figure 1 est une vue schématique du dispositif, vue de dessus, mettant en oeuvre conjointement deux moules,
■ la figure 2 est une vue schématique de face du dispositif de la figure 1.

Sur la figure 1 sont représentés un poste principal A et deux postes annexes B et B′ disposés de part et d'autre du poste principal.

A chaque poste annexe, B et B′, est affecté un moule, respectivement 1 et 2, dans lequel un vitrage, b ou b′, non représenté, va être surmoulé.

Le poste A est équipé d'une presse 3 à deux plateaux : un plateau inférieur 4, fixe et un plateau supérieur 5, mobile et d'une unité d'injection 6.

L'unité d'injection 6 comprend, notamment dans le cas d'injection de matières thermoplastiques, un calculateur (non représenté) permettant pour une même tête d'injection, plusieurs programmes d'injection spécifiques. Ce calculateur peut être celui commercialisé par la Société Allen Bradley sous le nom de "Q.D. injection". Des moules de formes et/ou dimensions différentes peuvent ainsi être utilisés conjointement.

Dans le cas d'applications RIM (réaction - Injection - Molding), l'unité d'injection 6 comprend, avantageusement, un module de pressage bicomposant par pompe volumétrique. Ce module a pour avantage d'éliminer la phase de remplissage, présente dans le cas du dosage par piston doseur. En outre, elle comporte avantageusement un contrôle de la pression d'injection en temps réel. Deux moules de formes et/ou dimensions distinctes peuvent être ainsi, le cas échéant, utilisés pour une même tête de mélange. Un calculateur (dispositif muni d'un logiciel) commande avantageusement ces deux fonctions. Ce calculateur pour l'injection RIM est par exemple celui commercialisé par la société Kraus Maffei.

Une table de transfert bidirectionnelle 7 assure le transfert du moule 1, entre le poste A et le poste B. Cette table de transfert est ici la partie inférieure d'un porte-moule dont la partie supérieure 8 s'ouvre par pivotement autour d'un axe 17, tel un porte-feuilles, grâce à l'action d'au moins un vérin (non représenté) embarqué sur le porte-moule. Cette table se déplace en étant animée par un vérin (non représenté) sur deux rails 9 et 10 traversant la presse 3. Son mouvement est limité du poste B au poste A. Deux butées de position réglables 11 et 12 sont disposées le long des rails. Ainsi par exemple la table 7 est arrêtée en butée 12 lorsque le poste A est occupé par le moule 2, par exemple.

D'un autre côté, une deuxième table de transfert bidirectionnelle 13 se déplaçant sur les deux rails 9 et 10 assure le transfert du moule 2 entre le poste B′ et le poste A, selon le même principe que la table 7. Deux butées de position réglables 14 et 15 sont disposées de même, le long des rails 9 et 10. Chaque moule, 1 ou 2, possède son propre mouvement commandé par le dispositif calculateur, indépendamment l'un de l'autre.

Le moule 1 est représenté en position fermée au poste B, le moule 2 est représenté ouvert au poste B′, donc tous deux dans leur poste annexe pour des facilités de représentation, sachant que normalement, en cours de fonctionnement, lorsqu'un moule est à son poste annexe, l'autre est au poste principal. Le système d'ouverture jusqu'à un angle de 90°, par exemple en porte-feuilles, de la partie supérieure du porte-moule grâce à l'action d'au moins un vérin (non représenté) embarqué sur le porte-moule permet une grande accessibilité au contenu du moule.

Une cabine d'aspiration 16 peut être installée en dehors des postes annexes B et B′, notamment lorsqu'il s'agit de matières plastiques de type RIM.

Avantageusement, en effet, des composés organiques solvantés, tels un agent démoulant ou une peinture protégeant la matière plastique contre les U.V. peuvent être pulvérisés sur le moule.

Une cabine d'extraction de matière polymérisée dans les canaux d'alimentation du moule, non représentée, peut aussi être présente, notamment lorsque la matière injectée est de nature thermoplastique.

La presse 3 est équipée, selon l'invention, de deux plateaux, un plateau inférieur 4 fixe et un plateau supérieur 5 mobile (figure 2). La course du plateau supérieur 5, verticale, peut être faible, limitant ainsi le temps de cycle. Le moule 1, ou le moule 2, est disposé sur le plateau inférieur 4.

La fermeture de la presse est hydraulique et contrôlée, par exemple, par un dispositif "tout ou rien" : le plateau supérieur 5 décrivant sa course d'un bout à l'autre sans possibilité d'arrêt intermédiaire, le temps de course est ainsi limité.

La presse 3 selon l'invention permet l'encapsulation aussi bien de matières de type thermoplastique que de matières de type bicomposant, par exemple de type RIM.

La force de fermeture, proportionnelle à la pression appliquée, garantit l'étanchéité évitant ainsi les bavures. Selon l'invention, la force de fermeture de la presse peut varier de 4.10⁵ à 5.10⁶ Newtons. En effet des matières du type thermoplastique, visqueuses, nécessitent généralement une force de fermeture de l'ordre de 4.10⁶ à 5.10⁶ Newtons ; des matières plastiques bicomposants, du type RIM, généralement moins visqueuses nécessitent habituellement une force de fermeture de l'ordre de 4.10⁵ à 5.10⁵ Newtons. La force de fermeture est ajustée et contrôlée, selon l'invention, par un limiteur hydraulique programmable.

L'exemple suivant décrit, de façon non limitative, la succession des différentes opérations réalisées lors de l'encapsulation de deux vitrages b et b′, conjointement, selon le dispositif décrit en relation avec les figures 1 et 2.

Les moules 1 et 2 peuvent être de formes et/ou de dimensions différentes.

Le moule 1, fermé, contenant le vitrage prêt à être encapsulé, est au poste A ; le moule 2, ouvert, se situe au poste B′. Un pression, proportionnelle à la surface de matière plastique à injecter, est appliquée par les plateaux de la presse au moule 1. L'étanchéité du moule 1 assurée, la matière plastique, par exemple un polyuréthane thermoplastique, est injectée. L'injection terminée, on libère la pression de moulage dans le moule en conservant une pression intermédiaire due à l'action des vérins du système porte-feuilles. Le moule 1, monté sur le porte-moule qui est supporté par la table de transfert 7, est transféré au poste B. La polymérisation de la matière plastique se déroule pendant et après le transfert. L'ensemble de ces opérations dure, environ une à deux minutes.

Pendant le déroulement de ces opérations, au poste annexe B′, un agent démoulant est appliqué sur le moule 2 ; une peinture anti U.V. y est ensuite pulvérisée. Eventuellement, des éléments additionnels, tels des éléments de fixation, de guidage, sont chargés dans le moule 2, ainsi que le vitrage b′. On ferme le moule 2 par le système porte-feuilles. L'ensemble de ces opérations dure environ une à deux minutes. Le moule 2 est transféré par la table de transfert 13 du poste B′ au poste A, préalablement libéré du moule 1, et est disposé sur le plateau inférieur 4 de la presse 3. Le transfert du moule 2 du poste B′ au poste A peut s'effectuer simultanément au transfert du moule 1 du poste A au poste B. Pendant la durée nécessaire à la mise sous pression de moulage, qui peut être différente de celle utilisée précédemment, et à l'injection de la matière plastique dans le moule 2, le vitrage b, surmoulé, est déchargé du moule 1. A nouveau, un agent démoulant puis une peinture anti U.V. sont pulvérisés sur le moule 1. Un deuxième vitrage, identique au vitrage b, est alors chargé dans le moule 1 ainsi qu'éventuellement des éléments additionnels. Le moule 1 est fermé et mis sous pression intermédiaire par action des vérins du système porte-feuilles et il est transféré au poste A, dégagé du moule 2, ce dernier libéré de la pression de moulage se situant au poste B′ ou entre le poste A et le poste B′.

Toutes les opérations annexes, relatives soit au moule 1 ou au moule 2, telles chargement, déchargement du vitrage, mise en place d'éléments additionnels, pulvérisation d'agent démoulant ou peinture anti U.V., polymérisation de la matière plastique, refroidissement..., sont effectuées en temps masqué, c'est-à-dire pendant la durée nécessaire à la mise sous pression, l'injection et la libération de la pression de moulage de l'autre moule.

D'autres opérations, non décrites, peuvent également se dérouler au poste principal ou au poste annexe.

## Revendications

1. Procédé de surmoulage sur au moins une partie d'un vitrage monolithique ou feuilleté, en verre, placé dans un moule, par injection de matière plastique, caractérisé en ce que les opérations essentielles constituant ce procédé sont réalisées en trois postes, un poste d'injection ou poste principal et au moins deux postes annexes selon les étapes suivantes :
· chargement d'un vitrage et, éventuellement, d'inserts dans un premier moule à un poste, dit poste annexe, ce moule étant ensuite fermé et mis sous une pression intermédiaire,
· chargement d'un deuxième vitrage et, éventuellement, d'inserts dans un deuxième moule dans un deuxième poste annexe, ce moule étant ensuite fermé et mis sous une pression intermédiaire,
· mouvements de transfert de chaque moule de leur poste annexe respectif vers le poste principal et vice-versa, indépendamment l'un de l'autre, chaque moule étant affecté à un poste annexe,
· mise sous pression et injection de matière plastique, au poste principal, dans l'un des deux moules, l'autre moule étant soit dans son poste annexe respectif, soit en mouvement,
· ouverture et déchargement de l'un ou l'autre moule dans son poste annexe respectif.

2. Procédé selon la revendication 1, caractérisé en ce que, pendant les transferts du poste principal aux poste annexe et réciproquement, une pression intermédiaire est appliquée aux moules.

3. Procédé selon la revendication 1, caractérisé en ce qu'un moule décrit, lors d'un cycle de surmoulage, un mouvement linéaire d'aller du poste annexe au poste principal puis de retour du poste principal au poste annexe.

4. Procédé selon la revendication 1, caractérisé en ce qu'il comporte deux postes annexes et un poste principal, chacun des postes annexes étant relié directement au poste principal.

5. Procédé selon la revendication 1, caractérisé en ce qu'il comporte plus de deux postes annexes équivalents et un poste principal, chacun des postes annexes étant relié directement au poste principal.

6. Dispositif pour la mise en oeuvre du procédé selon une des revendications 1 à 6, caractérisé en ce qu'il comprend une presse (3) et une unité d'injection (6) disposées au poste principal, au moins deux moules (1, 2) et au moins deux tables de transfert bidirectionnelles (7, 13) animées d'un mouvement linéaire pour le transfert des moules des postes annexes au poste principal et de retour du poste principal aux postes annexes.

7. Dispositif selon la revendication 6, caractérisé en ce que chaque moule est monté sur un porte-moule, le moule proprement dit étant monté sur la partie inférieure du porte-moule, le contre-moule étant monté sur la partie supérieure (8) du porte-moule, pouvant s'ouvrir tel un porte-feuilles par pivotement autour d'un axe parallèle à la table de transfert, l'ouverture et la fermeture étant assurées par au moins un vérin embarqué sur le porte-moule.

8. Dispositif selon la revendication 7, caractérisé en ce que la partie inférieure (7) du porte-moule forme la table de transfert.

9. Dispositif selon les revendications 6 à 8, caractérisé en ce que des matières plastiques de nature différente peuvent être injectées dans les deux moules.

10. Dispositif selon les revendications 6 à 9, caractérisé en ce qu'il comporte au moins deux moules distincts.

11. Dispositif selon la revendication 6, caractérisé en ce que l'unité d'injection est commandée par un dispositif muni d'un logiciel pouvant réguler l'ensemble des opérations du procédé.

## Claims

1. Method of moulding-on onto at least a portion of a monolithic or laminated pane of glass, placed in a mould, by injection of plastics material, characterized in that the essential operations constituting this method are carried out at three stations, an injection station or principal station and at least two auxiliary stations, in accordance with the following steps:
· loading of a pane and, optionally also, inserts into a first mould at a station termed auxiliary station, this mould then being closed and subjected to an intermediate pressure,
· loading of a second pane and, optionally also, inserts into a second mould in a second auxiliary station, this mould then being closed and subjected to an intermediate pressure,
· transfer movements of each mould from its respective auxiliary station towards the principal station and vice versa, independently of each other, each mould being associated with one auxiliary station,
· pressurizing and injection of plastics material, at the principal station, into the one of the two moulds, the other mould being either in its respective auxiliary station or in motion,
· opening and discharge of the one or other mould at its respective auxiliary station.

2. Method according to Claim 1, characterized in that, during the transfers from the principal station to the auxiliary stations and vice versa, an intermediate pressure is applied to the moulds.

3. Method according to Claim 1, characterized in that a mould describes, during a moulding-on cycle, a linear outward movement from the auxiliary station to the principal station and then linear return movement from the principal station to the auxiliary station.

4. Method according to Claim 1, characterized in that it comprises two auxiliary stations and one principal station, each of the auxiliary stations being connected directly to the principal station.

5. Method according to Claim 1, characterized in that it comprises more than two equivalent auxiliary stations and one principal station, each of the auxiliary stations being directly connected to the principal station.

6. Device for carrying out the method according to one of Claims 1 to 5, characterized in that it comprises a press (3) and an injection unit (6), disposed at the principal station, at least two moulds (1, 2) and at least two two-directional transfer tables (7, 13) subjected to a linear movement for transfer of the moulds from the auxiliary stations to the principal station and for returning from the principal station to the auxiliary stations.

7. Device according to Claim 6, characterized in that each mould is mounted on a mould-carrier, the mould properly speaking being mounted on the lower part of the mould-carrier, the counter-mould being mounted on the upper part (8) of the mould-carrier and capable of opening in hinged manner by pivoting about an axis parallel to the transfer table, the opening and closing being performed by at least one jack mounted on the mould-carrier.

8. Device according to Claim 7, characterized in that the lower part (7) of the mould-carrier forms the transfer table.

9. Device according to Claims 6 to 8, characterized in that plastics materials of different types may be injected into the two moulds.

10. Device according to Claims 6 to 9, characterized in that it comprises at least two distinct moulds.

11. Device according to Claim 6, characterized in that the injection unit is controlled by a device provided with software capable of regulating the entirety of the operations of the method.

## Patentansprüche

1. Verfahren zum Ummanteln wenigstens eines Teils einer in einer Form befindlichen einteiligen oder Verbundglasscheibe durch Spritzgießen von Kunststoff, **dadurch gekennzeichnet**, **daß** die dieses Verfahren bildenden wesentlichen Arbeitsgänge auf drei Stationen, einer Spritzgieß- oder Hauptstation und wenigstens zwei Nebenstationen, gemäß den folgenden Stufen durchgeführt werden:
- Aufgabe einer Glasscheibe und gegebenenfalls von zusätzlichen Elementen in eine erste Form auf einer als Nebenstation bezeichneten Station, wobei diese Form anschließend geschlossen und unter einen Zwischendruck gesetzt wird,
- Aufgabe einer zweiten Glasscheibe und gegebenenfalls von zusätzlichen Elementen in eine zweite Form auf einer zweiten Nebenstation, wobei diese Form anschließend geschlossen und unter einen Zwischendruck gesetzt wird,
- Transport jeder Form unabhängig voneinander von ihrer jeweiligen Nebenstation zur Hauptstation und umgekehrt, wobei jede Form zu einer Nebenstation gehört,
- Unterdrucksetzen und Spritzgießen von Kunststoff in einer der beiden Formen auf der Hauptstation, wobei sich die andere Form entweder auf ihrer entsprechenden Nebenstation oder in Bewegung befindet, und
- Öffnen und Entnahme aus der jeweiligen Form auf ihrer entsprechenden Nebenstation.

2. Verfahren nach Anspruch 1, **dadurch gekennzeichnet**, **daß** die Formen während des Transports von der Haupt- zur Nebenstation und umgekehrt unter einen Zwischendruck gesetzt werden.

3. Verfahren nach Anspruch 1, **dadurch gekennzeichnet**, **daß** eine vorgenannte Form während eines Ummantelungszyklus eine lineare Bewegung mitmacht, um von der Neben- zur Hauptstation und anschließend wieder von der Haupt- zur Nebenstation zu gelangen.

4. Verfahren nach Anspruch 1, **dadurch gekennzeichnet**, **daß** es zwei Nebenstationen und eine Hauptstation umfaßt, wobei jede Nebenstation direkt mit der Hauptstation verbunden ist.

5. Verfahren nach Anspruch 1, **dadurch gekennzeichnet**, **daß** es mehr als zwei gleichartige Nebenstationen und eine Hauptstation umfaßt, wobei jede Nebenstation direkt mit der Hauptstation verbunden ist.

6. Vorrichtung zur Durchführung des Verfahrens nach einem der Ansprüche 1 bis 5, **dadurch gekennzeichnet**, **daß** sie eine Presse (3) und eine Spritzgießeinheit (6), die in der Hauptstation angeordnet sind, wenigstens zwei Formen (1, 2) und wenigstens zwei linear angetriebene, hin und her bewegliche Transporttische (7, 13) für den Transport der Formen von den Nebenstationen zur Hauptstation und von der Hauptstation zu den Nebenstationen zurück umfaßt.

7. Vorrichtung nach Anspruch 6, **dadurch gekennzeichnet**, **daß** jede Form auf einem Formhalter befestigt ist, wobei die eigentliche Form auf dem unteren Teil des Formhalters und die Gegenform am oberen Teil (8) des Formhalters befestigt ist und sich wie eine Mappe durch Schwenken um eine parallel zum Transporttisch stehende Achse öffnen kann, dabei werden Öffnen und Schließen mittels wenigstens eines am Formhalter befindlichen Hubzylinders sichergestellt.

8. Vorrichtung nach Anspruch 7, **dadurch gekennzeichnet**, **daß** der Transporttisch vom unteren Teil (7) des Formhalters gebildet wird.

9. Vorrichtung nach den Ansprüchen 6 bis 8, **dadurch gekennzeichnet**, **daß** Kunststoffe verschiedenen Charakters in den beiden Formen spritzgegossen werden können.

10. Vorrichtung nach den Ansprüchen 6 bis 9, **dadurch gekennzeichnet**, **daß** sie wenigstens zwei verschiedene Formen umfaßt.

11. Vorrichtung nach Anspruch 6, **dadurch gekennzeichnet**, **daß** die Spritzgießeinheit von einer Einrichtung gesteuert wird, die mit einem Rechenprogramm ausgestattet ist, das sämtliche Arbeitsgänge des Verfahrens regeln kann.
